Europäisches Patentamt

European Patent Office

Office européen des brevets

(19)

(11) Numéro de publication: **0 491 939 B1**

(12) **FASCICULE DE BREVET EUROPEEN**

(45) Date de publication du fascicule du brevet: **18.10.95**  (51) Int. Cl.⁶: **C04B 35/10**, C22C 29/12

(21) Numéro de dépôt: **91914461.8**

(22) Date de dépôt: **22.07.91**

(86) Numéro de dépôt internationale :
**PCT/FR91/00606**

(87) Numéro de publication internationale :
**WO 92/01645 (06.02.92 92/04)**

(54) **POUDRES COMPOSITES ALUMINE/METAL, CERMETS REALISES A PARTIR DESDITES POUDRES ET PROCEDES DE FABRICATION.**

(30) Priorité: **24.07.90 FR 9009790**

(43) Date de publication de la demande:
**01.07.92 Bulletin 92/27**

(45) Mention de la délivrance du brevet:
**18.10.95 Bulletin 95/42**

(84) Etats contractants désignés:
**DE FR GB IT**

(56) Documents cités:
**EP-A- 0 028 885**
**DE-A- 2 327 180**
**US-A- 3 876 557**

**PROCEEDINGS OF THE 21st AUTOMOTIVE COORDINATION MEETING, mars 1984, Warrendale, PA (S); pp. 223-224**

**AMERICAN CERAMIC SOCIETY BULLETIN, vol. 61, no. 9, septembre 1982, Columbus, OH (US); C. MORGAN et al., pp. 974-981**

(73) Titulaire: **CENTRE NATIONAL DE LA RECHERCHE SCIENTIFIOUE (CNRS)**
**3, rue Michel Ange**
**F-75016 Paris (FR)**

(72) Inventeur: **ROUSSET, Abel**
**16, rue Jean-Moulin**
**F-31520 Ramonville (FR)**
Inventeur: **DEVAUX, Xavier**
**Le Bourg**
**F-24270 Lanouaille (FR)**

(74) Mandataire: **Barre, Philippe**
**Cabinet Barre Laforgue et associés**
**95 rue des Amidonniers**
**F-31000 Toulouse (FR)**

Rank Xerox (UK) Business Services
(3.10/3.09/3.3.3)

CHEMICAL ABSTRACTS, vol. 108, no. 12, mars 1988, Columbus, OH (US); A. YAMADA et al., no. 97188b

CHEMICAL ABSTRACTS, vol. 111, no. 6, 18 septembre 1989, Columbus, OH (US); J. CO-VINO, p. 293, no.- 101883f

JOURNAL OF MATERIALS SCIENCE, vol. 24, no. 1, janvier 1989, London (GB); J. GUILLE et al., pp. 97-100

## Description

L'invention concerne des poudres composites de céramique/métal du type comprenant une matrice d'alumine et au moins un métal de transition, en particulier fer, chrome, molybdène, cobalt, nickel, niobium qui se présente sous forme d'une dispersion de fines particules à l'intérieur de chaque grain de la matrice ; elle vise des poudres dites "nano-composites" dans lesquelles les particules métalliques sont à l'échelle du nanomètre. Elle s'étend aux cermets obtenus par frittage desdites poudres et aux procédés de fabrication de ces poudres et cermets.

Les poudres composites alumine/métal sont utilisées pour réaliser des catalyseurs, ou pour fabriquer par frittage des cermets ; ces derniers ont des applications nombreuses dans des secteurs variés de l'industrie en raison de leurs propriétés thermo-mécaniques et diélectriques (par "cermet", on entend selon l'habitude un matériau composite massif céramique/métal).

Les poudres composites alumine/métal connues à l'heure actuelle sont essentiellement de deux types :
. les poudres microcristallisées à grande porosité servant à la fabrication des catalyseurs supportés (J. J. Chen, E. Ruckenstein, Journal of Catalysis 69, (1981), 254-273 ; A. Uneo, H. Suzuki, Y. Kotera, Journal of the Chemical Society, Faraday Transaction 79, (1983), 127-136),
. les gels amorphes (L. Ganapathi et al, Journ. Solid State Ch., vol 66, 1987, pages 376-378 ; J.T. Klomp et al, Ceramurgia int., vol. 4, 1978, pages 59-65 ; D. Chakravorty, Sadhana, vol. 13, 1988, pages 13-18...).

Ces poudres sont constituées de matrices d'alumine γ ou amorphe et d'une dispersion métallique ; leur défaut essentiel est d'être thermiquement instables de sorte qu'elles ne permettent pas de fabriquer par frittage des cermets ayant de bonnes propriétés mécaniques ; lors du frittage, les particules métalliques ont en effet tendance à coalescer et à migrer vers les joints de grains pour conduire à une dispersion hétérogène dans laquelle la phase métallique se retrouve sous la forme de particules de grosses tailles juxtaposées aux grains de céramique, avec apparition de porosités entre ces phases : cette microstructure conditionne de mauvaises propriétés sur le plan mécanique et une instabilité thermique provenant des différences des coefficients de dilatation des phases (qui provoquent un éclatement de la structure lors de traitements thermiques).

Par ailleurs, certains documents antérieurs évoquent la possibilité de mélanger de l'alumine α avec un liant métallique (brevet DD 137 313 ; brevet US 4 397 963, "Proceeding of the 21st automotive technology coordination meeting", mars 1984, Society of Automotive Engineers Inc., Warrendale, PA, USA ; American Ceramic Society Bulletin, vol. 61, n° 9, septembre 1982, Colombus US pages 974-981, C.S. MORGAN ET AL. : Thermal-Shock Resistant Alumina-metal Cermet Insulators"). Toutefois, dans les poudres ainsi obtenues, le métal est disposé à la périphérie des grains : ces poudres présentent une micro structure fondamentalement différente de celle visée par l'invention, puisque le métal n'est pas inséré à l'intérieur de chaque grain de la matrice. Le frittage de ces poudres conduit à des microstructures de cermets similaires à celles évoquées plus haut avec les défauts inhérents.

La présente invention se propose de fournir de nouvelles poudres composites alumine/métal dans lesquelles le métal se trouve sous forme d'une dispersion à l'intérieur de chaque grain de matrice, et leur procédé de fabrication ; l'invention vise à pallier les défauts des poudres existantes et à permettre la fabrication de cermets bénéficiant de propriétés mécaniques très améliorées et d'un bon comportement thermo-mécanique.

En particulier, l'invention se propose de permettre la fabrication de cermets alumine/métal qui soient aptes à supporter des chocs thermiques.

Un autre objectif est de permettre de fabriquer des poudres à partir de plusieurs métaux, dans lesquelles la dispersion métallique se présente sous la forme d'alliages afin de profiter des propriétés de ces derniers.

A cet effet, la poudre composite de céramique/métal visée par l'invention, qui peut être obtenue par le procédé défini plus loin, est constituée de grains de taille micronique comprenant de l'alumine et au moins un métal de transition et se caractérise en ce que :
- chaque grain comprend une matrice compacte, de surface spécifique inférieure à 5 $m^2/g$,
- ladite matrice est constituée d'alumine α (corindon) de structure hexagonale,
- le ou les métaux de transition sont dispersés dans chaque grain au coeur de la matrice d'alumine sous forme de cristallites de tailles inférieures à 50 nanomètres (désignées plus loin par "nanocristallites"),
- le rapport pondéral métal/alumine est inférieur à 30 %.

La microstructure d'une telle poudre est fondamentalement différente de celle déjà réalisée avec de l'alumine α, puisque le ou les métaux se présentent sous la forme de très fines particules dispersées à l'intérieur de chaque grain d'alumine (et non d'un revêtement métallique disposé autour de chaque grain d'alumine ou de particules disposées entre les grains d'alumine). La poudre conforme à l'invention est affranchie des problèmes de mouillabilité de l'alumine par les métaux de transition (problèmes qui, dans les poudres connues, sont à la source des phénomènes de coalescence et de ségrégation des métaux lors des traitements thermiques) grâce à une dispersion homogène des nanocristallites métalliques dans les matrices microniques non poreuses d'alumine α (cette phase étant thermiquement stable).

La poudre composite conforme à l'invention permet de réaliser des cermets comprenant une matrice céramique d'alumine α dans laquelle sont dispersées, de façon intragranulaire, des particules métalliques de tailles inférieures à 100 nanomètres.

Ces cermets sont obtenus par frittage des poudres, en particulier dans les conditions suivantes :
- addition minoritaire à la poudre d'un liant organique ayant une température de décomposition comprise entre 150° C et 300° C, décomposition s'accompagnant d'un dégagement de CO,
- compactage du mélange poudre/liant,
- chauffage du mélange compacté, sous atmosphère neutre ou sous pression réduite, à une température comprise entre 1 350° C et 1 550° C.

Les observations des cermets ainsi obtenus, effectuées au microscope électronique et par diffraction des rayons X, permettent de mettre en évidence la très faible coalescence des cristallites métalliques dont la taille augmente légèrement au cours du frittage mais qui restent prisonnières des matrices céramiques sous la forme de petites particules intragranulaires, avec un faible pourcentage de particules intergranulaires dont la taille demeure faible (inférieure à 100 nanomètres). De tels cermets ont une structure compacte à taux de densification supérieur à 98%, qui conduit à d'excellentes propriétés mécaniques, en particulier :
. une résistance à la flexion comprise entre 500 et 1000 mégapascals,
. une résilience comprise entre 5 et 10 mégapascals par $\sqrt{m}$.

De plus, les essais ont montré que ces cermets soumis à des cycles thermiques chauffage/trempe (chauffages à 600° C suivis de trempes à l'eau) ne subissaient aucun dommage bien au-delà de 30 cycles, alors que les cermets connus éclatent au bout d'une dizaine de cycles et que l'alumine seule supporte à peine quelques cycles. Ces propriétés exceptionnelles de stabilité thermique proviennent de la structure même du cermet obtenu, dans laquelle l'alumine α est renforcée par la très fine dispersion intragranulaire ; en effet, la déformation plastique de la phase métallique permet d'absorber tout ou partie des déformations élastiques différentielles induites par un choc thermique. En outre, la ténacité de tels cermets est plus élevée que celle de l'alumine pure, une partie de l'énergie de propagation des fissures étant absorbée par les particules métalliques.

La poudre composite de céramique/métal conforme à l'invention peut en particulier être fabriquée par le procédé défini ci-après qui consiste :
(a) à préparer une solution aqueuse d'un sel mixte carboxylique d'aluminium et d'un ou de métaux de transition, de formule $Al_{1-x} M_x (R)_n$ où M représente le ou les métaux de transition, R est un radical carboxylique, x est inférieur à 0,3 et n est un nombre entier,
(b) à précipiter ce sel mixte par un solvant organique miscible à l'eau, dans lequel ledit sel est stable et insoluble,
(c) à séparer le précipité obtenu de la phase liquide et à recueillir celui-ci sous forme d'une poudre micronique de sel mixte, dite précurseur,
(d) à soumettre ledit précurseur à un traitement thermique de décomposition en présence d'oxygène à une température comprise entre 300° C et 500° C dans des conditions appropriées pour le décomposer et produire un oxyde mixte amorphe d'aluminium et du ou des métaux de transition $[Al_2O_3]_{(1-x)} M_{2x}O_y$, où y est un nombre entier fonction de la valence du ou des métaux de transition,
(e) dans le cas de métaux ou d'alliage a point de fusion inférieur à 1 600° C, à soumettre l'oxyde mixte à un traitement thermique de recuit en présence d'oxygène à une température comprise entre 1 000° C et 1 300° C afin d'obtenir une solution solide cristallisée d'alumine et d'oxyde du ou des métaux de transition,
(f) à réduire soit l'oxyde mixte amorphe issu de l'opération (d), soit dans le cas de métaux ou d'alliage à bas point de fusion, la solution solide cristallisée issue de l'opération (e), par un traitement thermique sous atmosphère réductrice exempte de vapeur d'eau à une température comprise entre 1 000° C et 1 300° C pendant une durée supérieure à 2 heures.

L'obtention des caractéristiques précitées de la poudre (nanocristallites métalliques dispersées dans des matrices microniques ; caractère compact de ces matrices ; type de l'alumine obtenue) est essentiellement conditionnée par :
. l'utilisation d'un précurseur mixte,
. les conditions de précipitation de celui-ci,

. les conditions de décomposition du précurseur,

. les conditions de traitement thermique des résidus de décomposition.

Les poudres obtenues par mise en oeuvre du procédé ci-dessus défini ont été analysées par diffraction des rayons X et observées par microscopie électronique. Dans la plupart des cas, le ou les métaux de transition sont dispersés dans la matrice d'alumine de chaque grain avec une distribution de tailles telle que 90 % en nombre des particules métalliques ont des tailles réparties sur un intervalle inférieur à 8 nanomètres, et le plus souvent comprises entre 1 et 7 nanomètres.

Le procédé de l'invention permet en particulier de réaliser des poudres composites constituées de grains comprenant une matrice d'alumine et au moins un métal du groupe suivant : fer, chrome, molybdène, cobalt, nickel, niobium. Il suffit de préparer la solution aqueuse de sel mixte carboxylique (a) à partir d'au moins un sel du métal correspondant.

Le procédé de l'invention permet également de réaliser des poudres composites constituées de grains comprenant une matrice d'alumine et au moins deux métaux de transition, dispersés dans la matrice sous forme d'alliage métallique. La forme alliée des métaux des cristallites a pu être mise en évidence par rayons X, microscopie électronique et analyse par dispersion d'énergie X. Il suffit pour fabriquer de telles poudres de préparer la solution aqueuse de sel mixte carboxylique (a) à partir d'au moins deux sels de métaux aptes à former un alliage, notamment fer/chrome, nickel/cobalt, nickel/chrome.

Par ailleurs, selon un mode de mise en oeuvre préféré, (a) l'on prépare la solution de sel mixte en mélangeant en milieu aqueux de l'acide oxalique ou un sel d'acide oxalique, un sel d'aluminium et au moins un sel d'un métal de transition afin de produire le sel mixte carboxylique par réaction de complexation entre les radicaux oxaliques, les ions métalliques d'aluminium et les ions du ou des métaux de transition. L'on peut en particulier choisir l'oxalate d'ammonium, le chlorure ou le nitrate d'aluminium et le chlorure ou le nitrate du ou des métaux de transition, en vue de former le sel mixte carboxylique suivant :

$$Al_{(1-x)} \, M_x \, (C_2 \, O_4)_3 \, (NH_4)_3$$

Pour améliorer encore la pureté et la morphologie des poudres obtenues (régularité de forme et de taille des matrices), le procédé conforme à l'invention peut être mis en oeuvre dans les conditions suivantes :

(a) l'on prépare une solution aqueuse de sel mixte carboxylique ayant une concentration comprise entre 0,1 et 3 moles/l,

(b)

. l'on amène le sel mixte carboxylique à précipiter en ajoutant la solution aqueuse dans un solvant alcoolique ou un mélange d'un solvant alcoolique et d'un autre solvant organique, ou un mélange de solvants alcooliques, en particulier mélange éthanol/éthylèneglycol ou méthanol/éthylèneglycol,

. l'on verse la solution aqueuse de sel mixte carboxylique dans le solvant de façon que le rapport volumétrique entre ladite solution aqueuse et ledit solvant soit compris entre 5 et 20, le milieu étant agité pendant une durée au moins égale à 30 minutes à une température au plus égale à 30°C,

(c) l'on sépare le précipité par filtration ou centrifugation, on lave celui-ci à l'acétone ou à l'éthanol et on le sèche à une température inférieure à 80°C,

(d) l'on réalise le traitement de décomposition en chauffant lentement la poudre sous balayage d'air, à une vitesse de montée en température au plus égale à 2°C par minute, jusqu'à une température de palier préférentiellement comprise entre 370° et 450°C, et en maintenant ensuite la poudre à cette température de palier pendant au moins une heure.

Dans le cas des métaux ou alliages à bas point de fusion (inférieur à 1 600°C), le traitement de recuit qui suit réduit la porosité des oxydes mixtes d'alumine et, en conséquence, limite les phénomènes de coalescence lors de l'étape suivante de réduction (les atomes métalliques ont, en effet, dans ce cas, une plus forte tendance à la diffusion en raison du faible écart entre la température de réduction et la température de fusion : la compacité accrue des matrices d'alumine limite cette tendance).

Pour les métaux ou alliages suivants (à bas point de fusion) : fer, cobalt, nickel, fer/chrome, cobalt/nickel, nickel/chrome, (e) ce traitement de recuit de l'oxyde mixte est de préférence réalisé pendant une durée au moins égale à 30 minutes, (f) la réduction de la solution solide cristallisée étant ensuite opérée sous atmosphère d'hydrogène sec pendant une durée comprise entre 2 et 20 heures.

Dans le cas de métaux de transition à haut point de fusion tel que le chrome et le niobium, (f) la réduction de l'oxyde mixte amorphe issue de l'opération (d) est directement opérée sous atmosphère d'hydrogène sec pendant une durée comprise entre 10 et 20 heures. Cette durée permet une bonne cristallisation de l'alumine α et élimine toute porosité.

**EP 0 491 939 B1**

Dans le cas du molybdène, (f) la réduction de l'oxyde mixte amorphe issu de l'opération (d) est directement opérée sous atmosphère d'hydrogène sec en chauffant l'oxyde d'abord à une température de palier comprise entre 400 et 500° C pendant une durée comprise entre 1 et 5 heures, ensuite à une température finale de palier comprise entre 1 000° et 1 200° C pendant une durée comprise entre 5 et 20 heures. Cette réduction en deux étapes successives écarte tout risque de sublimation des oxydes de molybdène lorsqu'on atteint la température de 800° C.

L'invention, exposée ci-dessus dans sa forme générale, est illustrée par les exemples 1 à 10 qui suivent en référence aux dessins annexés ; sur ces dessins :
- les figures 1, 3, 5, 7 et 8 sont des diagrammes de répartition granulométrique des poudres composites obtenues respectivement aux exemples 1, 3, 5, 7 et 8 ; en abcisse est porté à échelle logarithmique le diamètre moyen de chaque classe granulométrique (en microns), et en ordonnée le pourcentage volumique des grains,
- les figures 2, 4, 6 et 9 sont des histogrammes de répartition de tailles des particules métalliques dispersées dans les poudres composites obtenues respectivement aux exemples 1, 3, 5 et 8 ; en abcisse est portée la taille des particules métalliques en nanomètres et en ordonnée leur pourcentage en nombre (à partir d'une population de 1000 individus mesurés sur des micrographies obtenues par microscope électronique en transmission),
- les figures 10, 12, 14, 16 et 17 sont des micrographies des poudres composites obtenues respectivement aux exemples 1, 3, 5, 7 et 8,
- les figures 11, 13, 15 et 18 sont des micrographies des cermets obtenus respectivement aux exemples 2, 4, 6 et 9 (à noter que pour faciliter l'observation, les cermets correspondant aux micrographies 13, 15 et 18 ont été métallisés à l'or).

Exemple 1 : Préparation d'une poudre composite alumine-fer contenant 5,4 % en masse de fer.

a) Une solution A est préparée à partir de :
- 53,46 g de nitrate d'aluminium ($Al(NO_3)_3,9H_2O$),
- 3,03 g de nitrate de fer ($Fe(NO_3)_3,9H_2O$),
- 63,95 g d'oxalate d'ammonium (($NH_4)_2C_2O_4,H_2O$),
- 150 $cm^3$ d'eau distillée.

La solution A est agitée pendant 40 mn afin que la réaction de complexation suivante soit totale :

$$0,95\ Al(NO_3)_3\ +\ 0,05\ Fe(NO_3)_3\ +\ 3(NH_4)_2C_2O_4\ \rightarrow\ (NH_4)_3Al_{0,95}Fe_{0,05}(C_2O_4)_3\ +\ 3NH_4NO_3$$

La concentration molaire en oxalate de cette solution est de 0,75 mole/l.

b) Une solution B contenant 750 $cm^3$ d'éthanol et 750 $cm^3$ d'éthylèneglycol est préparée sous agitation. La solution A est ajoutée dans la solution B sous agitation. Le rapport volumétrique entre la solution A et la solution B est égal à 7,5. L'oxalate mixte $(NH_4)_3Al_{0,95}Fe_{0,05}(C_2O_4)_3$ précipite au bout de quelques minutes. L'agitation est maintenue pendant 1 heure à température ambiante (20° C).

c) Le précipité est filtré, puis lavé à l'éthanol. Il est ensuite séché à l'étuve (70° C), puis désaggloméré par broyage et tamisé. Il est analysé par analyse chimique et thermogravimétrie, et est constitué par l'oxalate mixte $(NH_4)_3Al_{0,95}Fe_{0,05}(C_2O_4)_3$.

d) Le précurseur ainsi obtenu est décomposé à l'air dans un four à 400° C, la vitesse de chauffage étant de 2° C/mn, le temps de palier d'une heure.

e) Le résidu de décomposition est porté ensuite à 1150° C pendant 2 heures à une vitesse de chauffage de 5° C/mn. L'analyse radiocristallographique révèle qu'à cette étape on obtient une solution solide d'alumine $\alpha$ et d'hématite. Le dosage chimique nous permet de conclure la présence de la phase $\alpha$ $Fe_{0,1}Al_{1,9}O_3$.

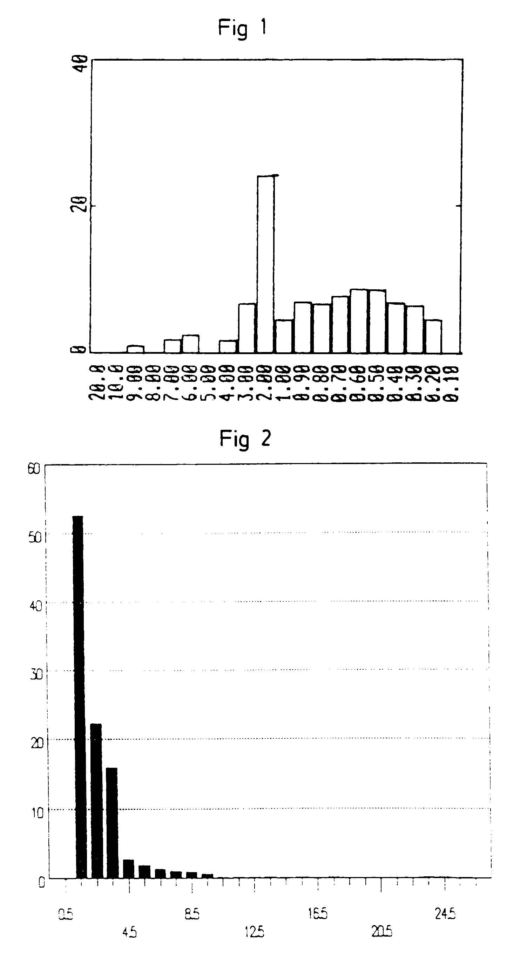

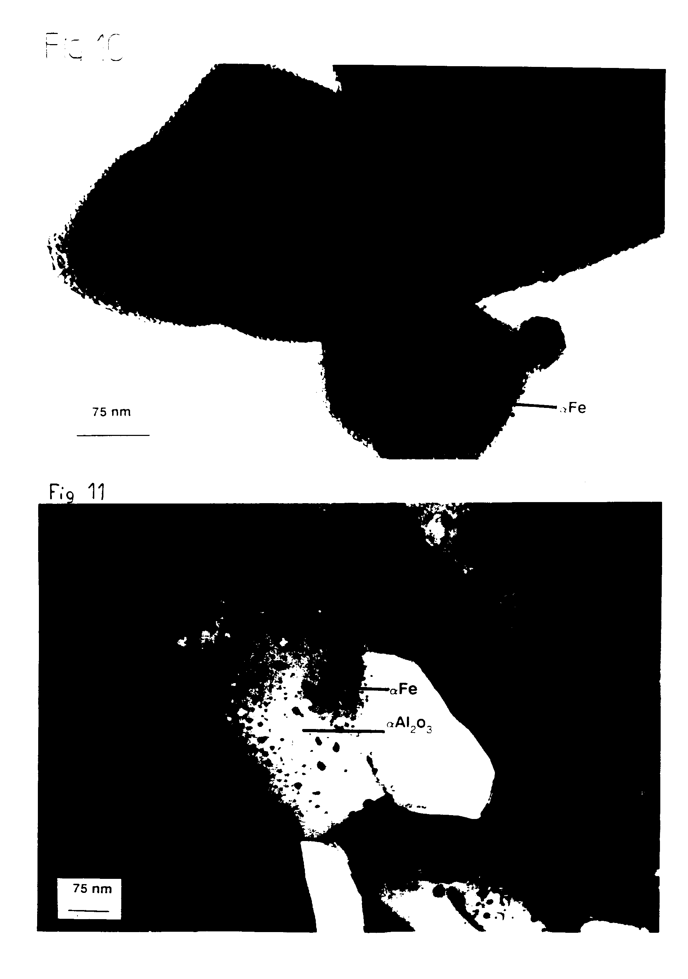

f) L'oxyde mixte est réduit sous hydrogène sec à une température de 1050° C pendant 3 heures. L'analyse radiocristallographique montre que la poudre obtenue est composée d'alumine $\alpha$ (structure hexagonale) et de fer métallique. L'analyse granulométrique (figure 1) indique que la taille moyenne des grains d'alumine est de 1,5 $\mu$m. La surface spécifique de la poudre composite, mesurée par la méthode B.E.T., est de 1,95 $m^2$/g. L'étude de la dispersion des particules métalliques est effectuée par microscopie électronique en transmission. Un système d'analyse par dispersion d'énergie X (EDAX) est couplé au microscope et permet de faire l'analyse chimique de zones de 10 nm de rayon. L'étude microscopique montre que les particules métalliques apparaissent avec un contraste sombre (figure 10). L'histogramme de répartion des tailles des particules de fer montre que la taille moyenne des particules métalliques est de 2,6 nm (figure 2). 90 % des particules métalliques ont des tailles comprises entre 1 et 5 nanomètres.

Exemple 2 : Préparation d'un cermet à partir de la poudre composite obtenue à l'exemple 1.

On mélange 3 g de la poudre composite alumine/fer, obtenue à l'exemple précédent, à 0,5 g d'acide polyvinylique. Ce mélange est pressé sous une charge de 43 MPa, sous vide, à une température de 1450°C pendant 15 minutes. Le taux de densification du cermet obtenu est de 99 %. La microstructure de ce cermet est étudiée par microscopie électronique en transmission (figure 11). Ces caractéristiques microstructurales et les propriétés mécaniques du cermet sont résumées dans le tableau récapitulatif fourni à la fin de la description.

Exemple 3 : Préparation d'une poudre composite alumine-fer contenant 10,8 % en masse de fer.

a) Une solution C est préparée à partir de :
- 50,64 g de nitrate d'aluminium $(Al(NO_3)_3, 9H_2O)$,
- 6,06 g de nitrate de fer $(Fe(NO_3)_3, 9H_2O)$,
- 63,95 g d'oxalate d'ammonium $((NH_4)_2C_2O_4, H_2O)$,
- 150 cm$^3$ d'eau distillée.

La solution C est agitée pendant 40 mn afin que la réaction de complexation suivante soit totale :

$$0,9Al(NO_3)_3 + 0,1 Fe(NO_3)_3 + 3(NH_4)_2C_2O_4 \rightarrow (NH_4)_3Al_{0,9}Fe_{0,1}(C_2O_4)_3 + 3NH_4NO_3$$

La concentration molaire en oxalate de cette solution est de 0,75 mole/l.

b) Une solution D contenant 1497 cm$^3$ d'éthanol et 3 cm$^3$ d'ammoniaque est préparée sous agitation. La solution C est ajoutée dans la solution D sous agitation. L'oxalate mixte $(NH_4)_3Al_{0,9}Fe_{0,1}(C_2O_4)_3$ précipite au bout de quelques minutes. L'agitation est maintenue pendant 1 heure à température ambiante (20°C).

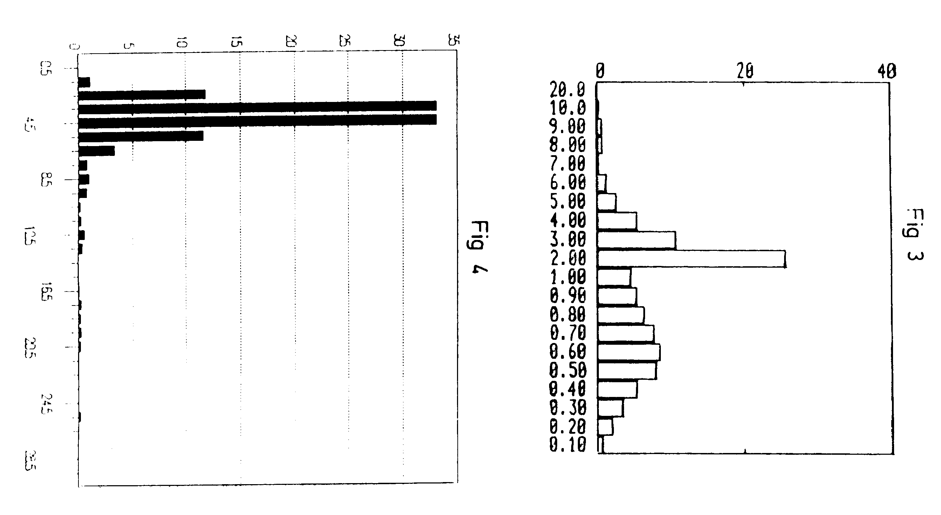

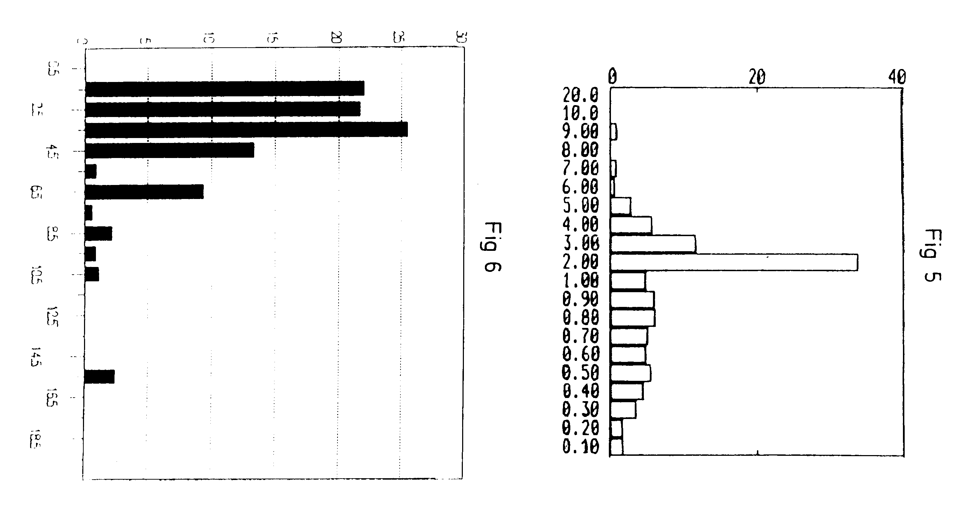

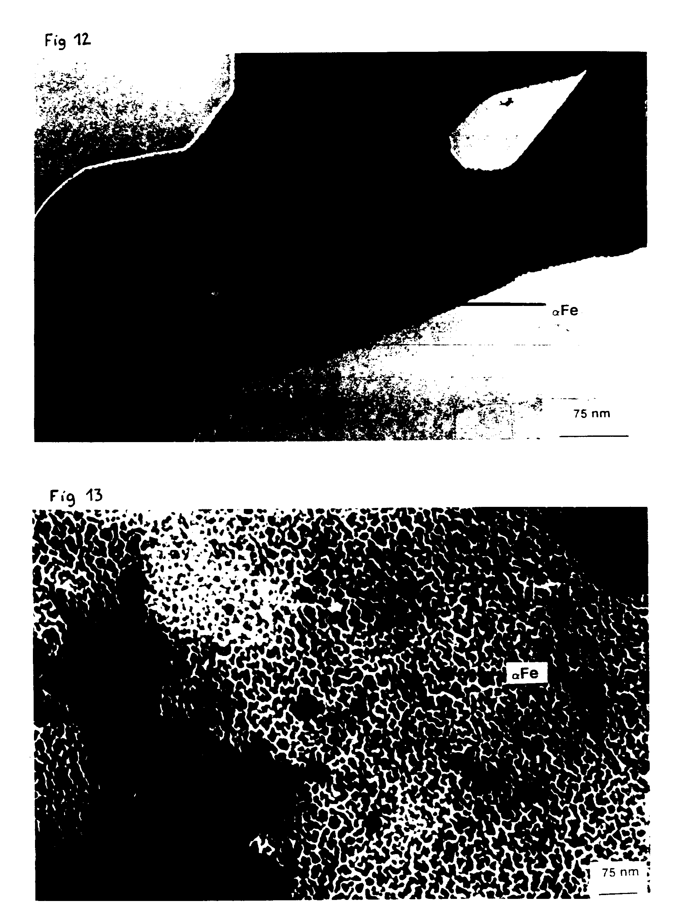

c-f) Les conditions de filtration, séchage, décomposition du précurseur oxalique, les traitements thermiques de recuit et de réduction sont similaires à ceux décrits à l'exemple 1. Les mêmes analyses sont effectuées sur la poudre composite. Les résultats sont les suivants :
- surface spécifique : 1,5 m$^2$/g,
- taille moyenne des grains de poudre (figure 3) : 1,45 $\mu$m,
- taille moyenne des particules de fer : 4,5 nm (histogramme de la figure 4 et micrographie de la figure 12),

90 % des particules métalliques ont des tailles comprises entre 2 et 7 nanomètres.

Exemple 4 : Préparation d'un cermet à partir de la poudre obtenue à l'exemple 3.

La poudre composite est densifiée dans les conditions décrites à l'exemple 2. Le taux de densification est de 99 %. La microstructure du cermet ainsi obtenu est présentée sur la micrographie de la figure 13. Les caractéristiques microstructurales et les propriétés mécaniques du cermet sont résumées dans le tableau récapitulatif en fin de description.

Exemple 5 : Préparation d'une poudre composite alumine-alliage fer-chrome contenant 10,8 % en masse d'alliage.

a) Une solution E est préparée à partir de :
- 50,64 g de nitrate d'aluminium $(Al(NO_3)_3, 9H_2O)$,
- 4,85 g de nitrate de fer $(Fe(NO_3)_3, 9H_2O)$,
- 1,20 g de nitrate de chrome $(Cr(NO_3)_3, 9H_2O)$,
- 63,95 g d'oxalate d'ammonium $((NH_4)_2C_2O_4, H_2O)$,
- 150 cm$^3$ d'eau distillée.

La solution E est agitée pendant 40 mn afin que la réaction de complexation suivante soit totale :

$$0,9Al(NO_3)_3 + 0,08Fe(NO_3)_3 + 0,02Cr(NO_3)_3 + 3(NH_4)_2C_2O_4 \rightarrow (NH_4)_3Al_{0,9}Fe_{0,08}Cr_{0,02}(C_2O_4)_3 + 3NH_4NO_3$$

La concentration molaire en oxalate est égale à 0,75 mole/l.

b) Une solution F contenant 750 cm$^3$ de méthanol et 750 cm$^3$ d'éthylèneglycol est préparée sous agitation. La solution E est ajoutée dans la solution F sous agitation. L'oxalate mixte $(NH_4)_3Al_{0,9}Fe_{0,08}Cr_{0,02}(C_2O_4)_3$ précipite au bout de quelques minutes. L'agitation est maintenue pendant 1 heure a température ambiante (20°C).

c-e) Les conditions de filtration, séchage, décomposition du précurseur oxalique, le traitement thermique de recuit sont similaires à ceux décrits à l'exemple 1.

f) L'oxyde mixte $Al_{1,8}Cr_{0,04}Fe_{0,16}O_3$ ainsi synthétisé est réduit pendant 10 heures sous hydrogène sec à 1050°C. Les mêmes analyses que précédemment sont effectuées sur la poudre composite. Les résultats sont les suivants :

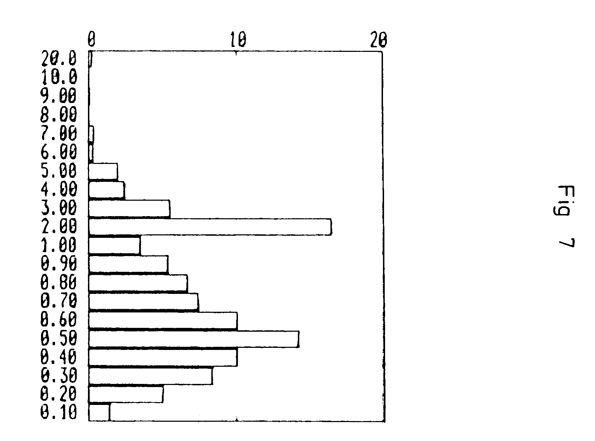

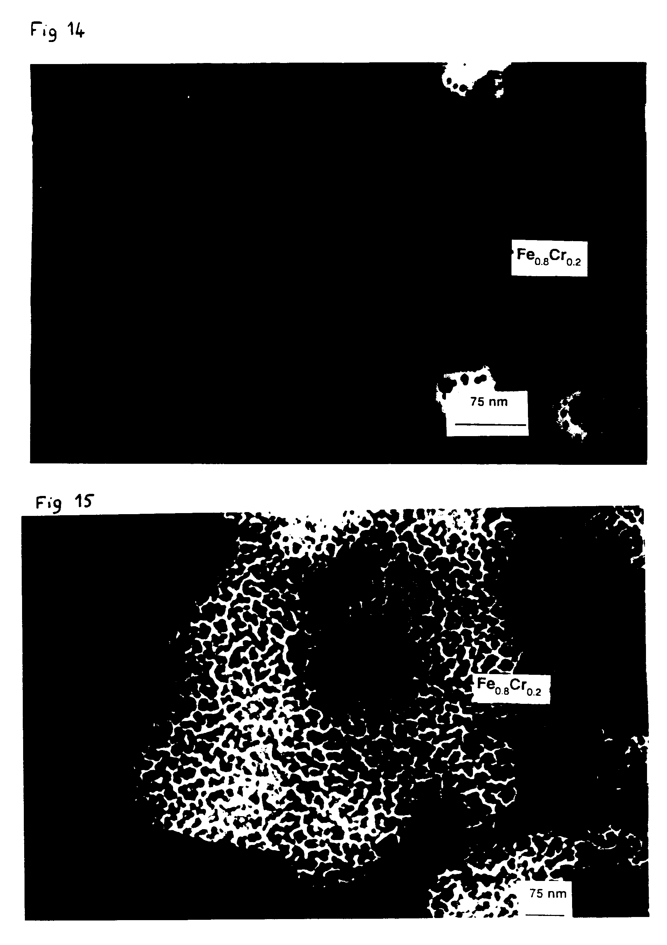

- surface spécifique : 1,9 m$^2$/g,
- taille moyenne des grains de poudre (figure 5) : 1,3 $\mu$m,
- taille moyenne des particules d'alliage $Fe_{0,8}Cr_{0,2}$ : 4,0 nm (histogramme de la figure 6 et micrographie de la figure 14),

Exemple 6 : Préparation d'un cermet à partir de la poudre obtenue à l'exemple 5.

La poudre composite est densifiée dans les conditions décrites à l'exemple 1. La microstructure du cermet ainsi obtenu est présentée sur la micrographie de la figure 15. Les caractéristiques microstructurales et les propriétés mécaniques du cermet sont résumées dans le tableau récapitulatif en fin de description.

Exemple 7 : Préparation d'une poudre alumine-molybdène contenant 10,8 % en masse de molybdène.

a) Une solution G est préparée à partir de :
- 50,64 g de nitrate d'aluminium $(Al(NO_3)_3,9H_2O)$,
- 2,40 g d'acide molybique $(NH_4)_2Mo_4O_{13})$,
- 63,95 g d'oxalate d'ammonium $(NH_4)_2C_2O_4,H_2O)$,
- 150 cm$^3$ d'eau distillée.

On obtient le précurseur $(NH_4)_{3,15}Al_{0,9}(MoO_3)_{0,1}(C_2O_4)_3$.

b) Une solution B (identique à celle préparée à l'exemple 1) contenant 750 cm$^3$ d'éthanol et 750 cm$^3$ d'éthylèneglycol est préparée sous agitation. La solution G est ajoutée dans la solution B sous agitation. L'oxalate mixte $(NH_4)_{3,15}Al_{0,9}(MoO_3)_{0,1}(C_2O_4)_3$ précipite au bout de quelques minutes. L'agitation est maintenue pendant 1 heure à température ambiante (20°C).

c-d) Les conditions de filtration, séchage, décomposition du précurseur oxalique sont similaires à celles décrites à l'exemple 1.

f) L'oxyde mixte amorphe ainsi obtenu est directement traité sous hydrogène sec, sans recuit compte tenu du haut point de fusion du molybdène (1610°C). Le procédé de réduction s'opère de la façon suivante : vitesse de chauffage 5°C/mn, palier 450°C pendant 2 heures, palier 1150°C pendant 5 heures. Les mêmes analyses que précédemment sont effectuées sur la poudre composite. Les résultats sont les suivants :

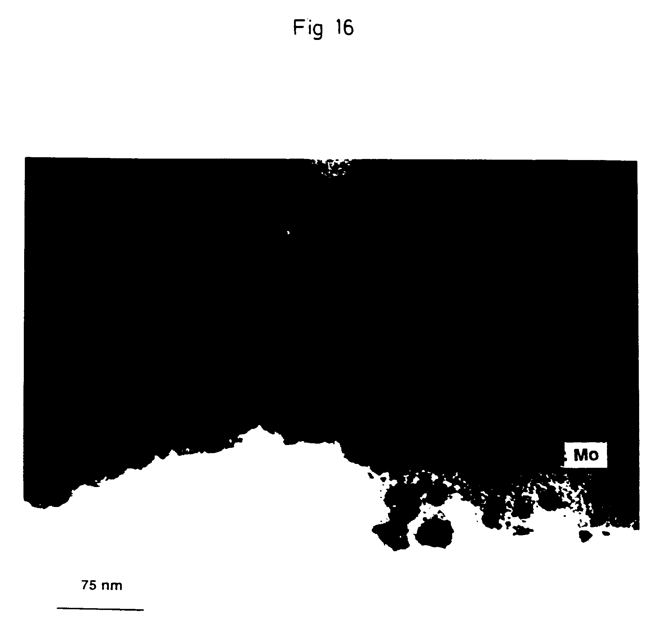

- surface spécifique : 2 m$^2$/g,
- taille moyenne des grains de poudre (figure 7) : 1,3 $\mu$m,
- taille moyenne des particules de molybdène : 40 nm (micrographie de la figure 16).

Exemple 8 : Préparation d'une poudre alumine-chrome contenant 21 % en masse de chrome.

a) Une solution H est préparée à partir de :
- 45,02 g de nitrate d'aluminium $(Al(NO_3)_3,9H_2O)$,
- 12,0 g de nitrate de chrome $(Cr(NO_3)_3,9H_2O)$,
- 63,95 g d'oxalate d'ammonium $((NH_4)_2C_2O_4,H_2O)$,
- 150 cm$^3$ d'eau distillée.

La solution H est agitée pendant 40 mn afin que la réaction de complexation suivante soit totale :

$$0,8Al(NO_3)_3 + 0,2\ Cr(NO_3)_3 + 3(NH_4)_2C_2O_4 \rightarrow (NH_4)_3Al_{0,8}Cr_{0,2}(C_2O_4)_3 + 3NH_4NO_3$$

La concentration molaire en oxalate est de 0,75 mole/l.

b) Une solution B (identique à celle de l'exemple 1) contenant 750 cm$^3$ d'éthanol et 750 cm$^3$ d'éthylèneglycol est préparée sous agitation. La solution H est ajoutée dans la solution B sous agitation. L'oxalate mixte $(NH_4)_3Al_{0,8}Cr_{0,2}(C_2O_4)_3$ précipite au bout de quelques minutes. L'agitation est maintenue pendant 1 heure à température ambiante (20°C).

c-d) Les conditions de filtration, séchage, décomposition du précurseur oxalique sont similaires à celles décrites à l'exemple 1.

f) L'oxyde mixte amorphe $Al_{1,6}Cr_{0,4}O_3$ ainsi synthétisé est directement réduit pendant 20 heures sous hydrogène à 1050°C (température de fusion de chrome : 1875°C). Les mêmes analyses que précédemment sont effectuées sur la poudre composite. Les résultats sont les suivants :

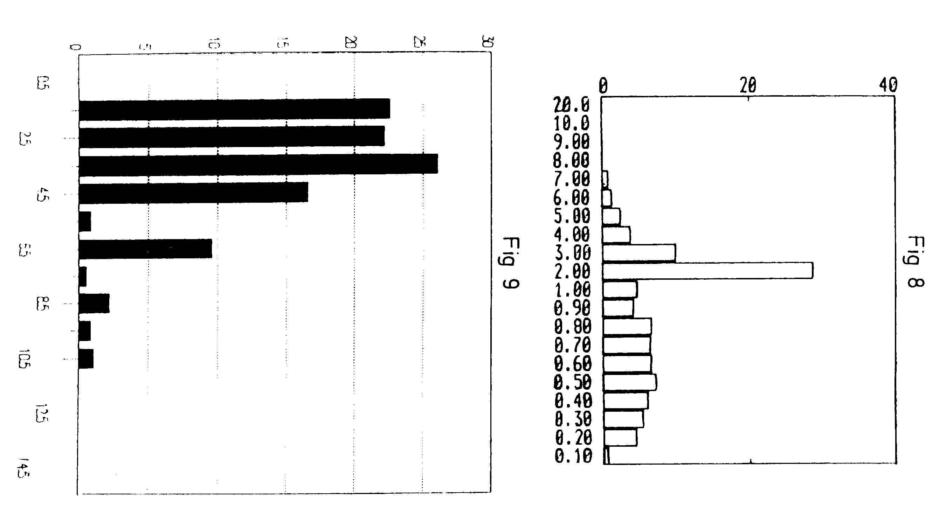

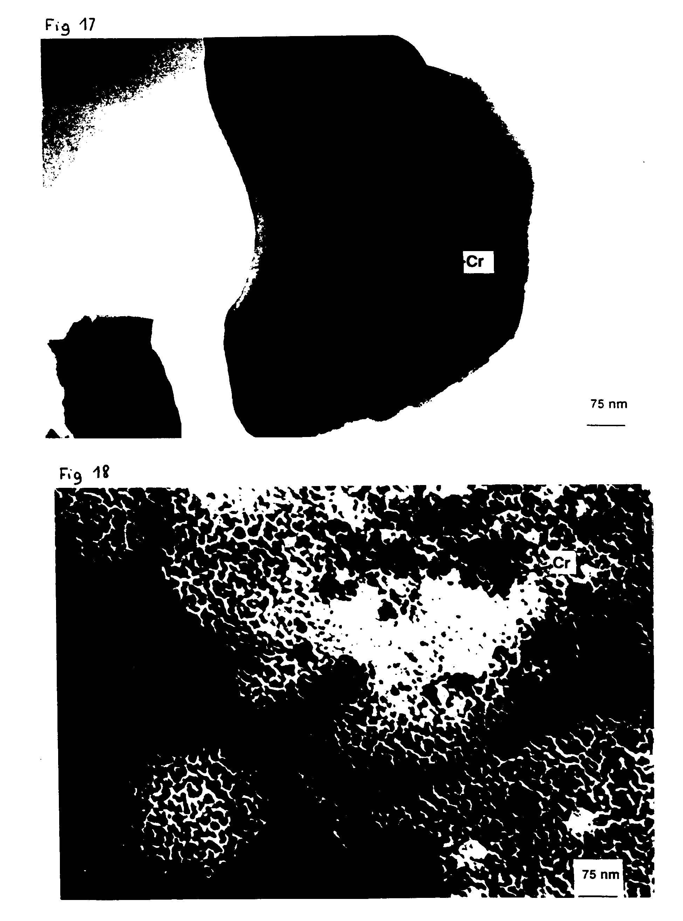

- surface spécifique : 1,9 $m^2/g$,
- taille moyenne des grains de poudre (figure 8) : 1,3 $\mu$m,
- taille moyenne des particules de chrome : 4,0 nm (diagramme de la figure 9 et micrographie de la figure 17).

Exemple 9 : Préparation d'un cermet à partir de la poudre obtenue à l'exemple 8.

La poudre composite est densifiée dans les conditions décrites à l'exemple 1. Le taux de densification est de 99 %. La microstructure du cermet ainsi obtenu est présentée sur la micrographie de la figure 18. Les caractéristiques microstructurales et les propriétés mécaniques du cermet sont résumées dans le tableau récapitulatif qui suit.

Ce tableau résume les propriétés structurales et mécaniques des cermets obtenus aux exemples 2, 4, 6 et 9 ci-dessus décrits :

| Tableau récapitulatif | | | | | |
|---|---|---|---|---|---|
| Exemple | C (%) | d (nm) | $\sigma_f$ (MPa) | $K_{ic}$ (MPa/$\sqrt{}$m) | N |
| 2 | 5,4 | 20 | 600 | 7,2 | 50 |
| 4 | 10,8 | 30 | 530 | 6,8 | 30 |
| 6 | 10,8 | 20 | 650 | 7,5 | 27 |
| 9 | 21,0 | 25 | 600 | 6,5 | 30 |
| C : Pourcentage massique de phase métallique<br>d : Diamètre moyen des particules métalliques (RX, méthode de Scherrer)<br>$\sigma_f$ : Résistance à la rupture en flexion trois points<br>$K_{ic}$ : Facteur d'intensité de contrainte critique (méthode "S.E.N.B."), ténacité<br>N : Nombre de chocs thermiques à rupture par trempe à l'eau ($\Delta_T$ = 600°C) | | | | | |

A titre de comparaison, sont données ci-après les caractéristiques d'une céramique d'alumine $\alpha$ $Al_2O_3$ frittée dans les mêmes conditions (taux de densification : 99 %) :

$$\sigma_f = 450 \text{ MPa} \qquad K_{ic} = 4 \text{ MPa}/\sqrt{}m \qquad N = 3 \text{ chocs}$$

Exemple 10 : Préparation d'une poudre composite alumine-alliage fer-chrome contenant 21 % en masse d'alliage

a) Une solution est préparée à partir de
- 45,02 g de nitrate d'aluminium $(Al(NO_3)_3,9H_2O)$,
- 6,06 g de nitrate de fer $(Fe(NO_3)_3,9H_2O)$,
- 6,00 g de nitrate de chrome $(Cr(NO_3)_3,9H_2O)$,
- 63,95 g d'oxalate d'ammonium $(NH_4)_2C_2O_4,H_2O)$,
- 150 $cm^3$ d'eau distillée.

La solution est agitée pendant 1 heure afin que la réaction de complexation suivante soit totale :

$$0,8Al(NO_3)_3 + 0,1 \text{ Fe}(NO_3)_3 + 0,1 \text{ Cr}(NO_3)_3 + 3(NH_4)_2C_2O_4 \rightarrow (NH_4)_3 \text{ Al}_{0,8} \text{ Fe}_{0,1} \text{ Cr}_{0,1} (C_2O_4)_3 + 3NH_4NO_3$$

La concentration molaire en oxalate est égale à 0,75 mole/l.

b-e) Les conditions de précipitation, filtration, séchage, décomposition du précurseur oxalique, le traitement thermique de recuit sont similaires à ceux décrits à l'exemple 1.

f) L'oxyde mixte $Al_{1,6}$ $Cr_{0,2}$ $Fe_{0,2}$ $O_3$ ainsi synthétisé est réduit pendant 20 heures sous hydrogène sec à 1050° C.

Les mêmes analyses que précédemment sont effectuées sur la poudre composite. Les résultats sont les suivants :

- surface spécifique : 3,1 $m^2/g$,
- taille moyenne des grains de poudre : 2,2 $\mu m$,
- taille moyenne des particules d'alliage $Fe_{0,5}$ $Cr_{0,5}$ : 4,2 nm.

## Revendications

1. Poudre composite de céramique/métal constituée de grains de taille micronique comprenant de l'alumine et au moins un métal de transition, caractérisée en ce que :
   - chaque grain comprend une matrice compacte, la surface spécifique de la poudre étant inférieure à $5 m^2/g$,
   - ladite matrice est constituée d'alumine (corindon) de structure hexagonale,
   - le ou les métaux de transition sont dispersés dans chaque grain au coeur de la matrice d'alumine sous forme de cristallites de tailles inférieures à 50 nanomètres,
   - le rapport pondéral métal/alumine est inférieur à 30 %.

2. Poudre composite selon la revendication 1, caractérisée en ce que le ou les métaux de transition sont dispersés dans la matrice d'alumine de chaque grain avec une distribution de tailles telle que 90 % en nombre des particules métalliques ont des tailles réparties sur un intervalle inférieur à 8 nanomètres.

3. Poudre composite selon la revendication 2, caractérisée en ce que le ou les métaux de transition sont dispersés dans la matrice d'alumine de chaque grain avec une distribution de tailles telle que 90 % en nombre des particules métalliques ont des tailles comprises entre 1 et 7 nanomètres.

4. Poudre composite selon l'une des revendications 1, 2 ou 3, constituée de grains comprenant une matrice d'alumine et au moins un métal du groupe suivant : fer, chrome, molybdène, cobalt, nickel, niobium ou un alliage de ces métaux.

5. Poudre composite selon l'une des revendications 1, 2, 3 ou 4, caractérisée en ce qu'elle est constituée de grains comprenant une matrice d'alumine et au moins deux métaux de transition, dispersés dans la matrice sous forme d'alliage métallique.

6. Poudre composite selon la revendication 5, caractérisée en ce que les grains contiennent des cristallites d'un des alliages suivants : fer-chrome, nickel-cobalt ou nickel-chrome.

7. Cermet obtenu par frittage d'une poudre composite de céramique/métal conforme à l'une des revendications 1 à 6, comprenant une matrice céramique d'alumine $\alpha$ dans laquelle sont dispersées, de façon intragranulaire, des particules métalliques de tailles inférieures à 100 nanomètres.

8. Cermet selon la revendication 7, caractérisé par les propriétés suivantes :
   . une résistance à la flexion comprise entre 500 et 1000 mégapascals,
   . une résilience comprise entre 5 et 10 mégapascals par $\sqrt{m}$.

9. Procédé de fabrication d'une poudre composite de céramique/métal conforme à l'une des revendications 1 à 6, caractérisé en ce qu'il consiste :
   (a) à préparer une solution aqueuse d'un sel mixte carboxylique d'aluminium et d'un ou de métaux de transition, de formule $Al_{1-x}$ $M_x$ $(R)_n$ où M représente le ou les métaux de transition, R est un radical carboxylique, x est inférieur à 0,3 et n est un nombre entier,
   (b) à précipiter ce sel mixte par un solvant organique miscible à l'eau, dans lequel ledit sel est stable et insoluble,
   (c) à séparer le précipité obtenu de la phase liquide et à recueillir celui-ci sous forme d'une poudre micronique de sel mixte, dite précurseur,

10

(d) à soumettre ledit précurseur à un traitement thermique de décomposition en présence d'oxygène à une température comprise entre 300° C et 500° C dans des conditions appropriées pour le décomposer et produire un oxyde mixte amorphe d'aluminium et du ou des métaux de transition $[Al_2O_3]_{(1-x)} M_{2x}O_y$, où y est un nombre entier fonction de la valence du ou des métaux de transition,

(e) dans le cas de métaux ou d'alliage à point de fusion inférieur à 1 600° C, à soumettre l'oxyde mixte à un traitement thermique de recuit en présence d'oxygène à une température comprise entre 1 000° C et 1 300° C afin d'obtenir une solution solide cristallisée d'alumine et d'oxyde du ou des métaux de transition,

(f) à réduire soit l'oxyde mixte amorphe issu de l'opération (d), soit dans le cas de métaux ou d'alliage à bas point de fusion, la solution solide cristallisée issue de l'opération (e), par un traitement thermique sous atmosphère réductrice exempte de vapeur d'eau à une température comprise entre 1 000° C et 1 300° C pendant une durée supérieure à 2 heures.

10. Procédé de fabrication selon la revendication 9, caractérisé en ce que (a) l'on prépare la solution aqueuse de sel mixte carboxylique à partir d'au moins un sel d'un métal du groupe suivant : fer, chrome, molybdène, cobalt, nickel, niobium ou avec au moins deux sels de ces métaux aptes à former un alliage.

11. Procédé de fabrication selon l'une des revendications 9 ou 10, caractérisé en ce que (a) l'on prépare la solution en mélangeant en milieu aqueux de l'acide oxalique ou un sel d'acide oxalique, un sel d'aluminium et au moins un sel d'un métal de transition afin de produire le sel mixte carboxylique par réaction de complexation entre les radicaux oxaliques, les ions métalliques d'aluminium et les ions du ou des métaux de transition.

12. Procédé de fabrication selon la revendication 11, caractérisé en ce que (a) l'on choisit de l'oxalate d'ammonium, du chlorure ou du nitrate d'aluminium et du chlorure ou du nitrate du ou des métaux de transition, en vue de former le sel mixte carboxylique suivant :

$$Al_{(1-x)} M_x (C_2 O_4)_3 (NH_4)_3$$

13. Procédé de fabrication selon l'une des revendications 9, 10, 11 ou 12, caractérisé en ce que (a) l'on prépare une solution aqueuse de sel mixte carboxylique ayant une concentration comprise entre 0,1 et 3 moles/l.

14. Procédé de fabrication selon l'une des revendications 9 à 13, caractérisé en ce que (b) l'on amène le sel mixte carboxylique à précipiter en ajoutant la solution aqueuse dans un solvant alcoolique ou un mélange d'un solvant alcoolique et d'un autre solvant organique, ou un mélange de solvants alcooliques, en particulier mélange éthanol/éthylèneglycol ou méthanol/éthylèneglycol.

15. Procédé selon la revendication 14 pour la fabrication d'une poudre composite alumine/fer, caractérisé en ce que (b) l'on choisit comme solvant de l'éthanol avec addition minoritaire d'une base.

16. Procédé de fabrication selon la revendication 13, caractérisé en ce que (b) l'on verse la solution aqueuse de sel mixte carboxylique dans le solvant de façon que le rapport volumétrique entre ladite solution aqueuse et ledit solvant soit compris entre 5 et 20, le milieu étant agité pendant une durée au moins égale à 30 minutes à une température au plus égale à 30° C.

17. Procédé de fabrication selon l'une des revendications 9 à 16, caractérisé en ce que (c) l'on sépare le précipité par filtration ou centrifugation, on lave celui-ci à l'acétone ou à l'éthanol et on le sèche à une température inférieure à 80° C.

18. Procédé de fabrication selon l'une des revendications 9 à 17, caractérisé en ce que (d) le traitement de décomposition consiste à chauffer lentement la poudre sous balayage d'air, à une vitesse de montée en température au plus égale à 2° C par minute, jusqu'à une température de palier préférentiellement comprise entre 370° et 450° C, et à maintenir ensuite pendant au moins une heure la poudre à cette température de palier.

19. Procédé selon l'une des revendications 9 à 18 pour la fabrication d'une poudre composite contenant un métal de transition à bas point de fusion : fer, cobalt ou nickel, ou un alliage à bas point de fusion : fer/chrome, cobalt/nickel ou nickel/chrome, caractérisé en ce que (e) l'on soumet l'oxyde mixte obtenu à l'issue de l'opération (d) à un traitement de recuit à l'air pendant au moins 30 minutes.

20. Procédé de fabrication selon la revendication 19, caractérisé en ce que (f) la réduction de la solution solide cristallisée est opérée sous atmosphère d'hydrogène sec pendant une durée comprise entre 2 et 20 heures.

21. Procédé selon l'une des revendications 9 à 18 pour la fabrication d'une poudre composite contenant un métal de transition à haut point de fusion : chrome, niobium, caractérisé en ce que (f) la réduction de l'oxyde mixte amorphe issu de l'opération (d) est directement opérée sous atmosphère d'hydrogène sec pendant une durée comprise entre 10 et 20 heures.

22. Procédé selon l'une des revendications 9 à 18 pour la fabrication d'une poudre composite alumine/molybdène, caractérisé en ce que (f) la réduction de l'oxyde mixte amorphe issu de l'opération (d) est directement opérée sous atmosphère d'hydrogène sec en chauffant l'oxyde d'abord à une température de palier comprise entre 400 et 500° C pendant une durée comprise entre 1 et 5 heures, ensuite à une température finale de palier comprise entre 1 000° et 1 200° C pendant une durée comprise entre 5 et 20 heures.

23. Procédé de fabrication d'un cermet conforme à l'une des revendications 7 ou 8, caractérisé en ce qu'il consiste à préparer une poudre composite de céramique/métal par mise en oeuvre du procédé conforme à l'une des revendications 9 à 22 et à réaliser un frittage de cette poudre dans les conditions suivantes :
   - addition minoritaire d'un liant organique ayant une température de décomposition comprise entre 150° C et 300° C, ladite décomposition s'accompagnant d'un dégagement de CO,
   - compactage du mélange poudre/liant,
   - chauffage du mélange compacté, sous atmosphère neutre ou sous pression réduite, à une température comprise entre 1 350° C et 1 550° C.

**Claims**

1. Composite ceramic/metal powder composed of micron-sized grains comprising alumina and at least one transition metal, characterised in that:
   - each grain comprises a compact matrix with a specific surface of the powder amounting to less than 5 $m^2/g$,
   - said matrix consists of alumina (corundum) of hexagonal structure,
   - the transition metal or metals is/are dispersed in every grain at the core of the aluminium-oxide matrix in the form of crystallites measuring less than 50 nanometres,
   - the metal/alumina ratio amounts to less than 30 % by weight.

2. Composite powder according to Claim 1, characterised in that the transition metal or metals is/are dispersed in the alumina matrix of every grain, the size distribution being such that 90 % by number of the metallic particles have sizes spread over a span of less than 8 nanometres.

3. Composite powder according to Claim 2, characterised in that the transition metal or metals is/are dispersed in the alumina matrix of every grain, the size distribution being such that 90 % by number of the metallic particles measure between 1 and 7 nanometres.

4. Composite powder according to one of Claims 1, 2 or 3, composed of grains comprising an alumina matrix and at least one metal of the following group: iron, chromium, molybdenum, cobalt, nickel, niobium or an alloy of these metals.

5. Composite powder according to one of Claims 1, 2, 3 or 4, characterised in that it is composed of grains comprising an alumina matrix and at least two transition metals dispersed in the matrix in the form of a metal alloy.

**EP 0 491 939 B1**

6. Composite powder according to Claim 5, characterised in that the grains contain crystallites of one of the following alloys: chromium-iron, nickel-cobalt or nickel-chromium.

7. Cermet obtained by sintering a composite ceramic/metal powder according to one of Claims 1 to 6, comprising a ceramic matrix of $\alpha$-alumina, metallic particles measuring less than 100 nanometres being dispersed in intragranular manner within said matrix.

8. Cermet according to Claim 7, characterised by the following properties:
   . a bending strength between 500 and 1000 megapascals,
   . a resilience between 5 and 10 megapascals per $\sqrt{m}$.

9. Process for manufacturing a composite ceramic/metal powder according to one of Claims 1 to 6, characterised in that it consists:
   (a) in preparing an aqueous solution of a mixed carboxylic salt of aluminium and of one or several transition metals, said salt having the formula $Al_{1-x} M_x (R)_n$ where M represents the transition metal or metals, R is a carboxylic radical, x amounts to less than 0.3 and n is an integer,
   (b) in precipitating said mixed salt with the aid of an organic solvent capable of being mixed with water, in which said salt is stable and insoluble,
   (c) in separating the precipitate obtained from the liquid phase and in collecting said precipitate in the form of a micron-sized mixed salt powder, the so-called precursor,
   (d) in subjecting said precursor to a thermal decomposition treatment in the presence of oxygen and at a temperature between 300°C and 500°C under conditions appropriate for decomposing it and producing an amorphous mixed oxide of aluminium and transition metal or metals $[Al_2O_3]_{(1-x)} M_{2x}O_y$, where y is an integer depending on the valency of the transition metal or metals,
   (e) in the case of metals or an alloy with a melting-point of less than 1600°C, in subjecting the mixed oxide to a thermal annealing treatment in the presence of oxygen and at a temperature between 1000°C and 1300°C in order to obtain a crystallised solid solution of alumina and an oxide of the transition metal or metals,
   (f) in reducing either the amorphous mixed oxide resulting from operation (d) or, in the case of metals or of an alloy with a low melting-point, the crystallised solid solution resulting from operation (e) by a thermal treatment in a reducing atmosphere free from water vapour and at a temperature between 1000°C and 1300°C, over a period of more than 2 hours.

10. Production process according to Claim 9, characterised in that (a) the aqueous mixed carboxylic salt solution is prepared from at least one salt of a metal pertaining to the following group - iron, chromium, molybdenum, cobalt, nickel, niobium - or with at least two salts of these metals capable of forming an alloy.

11. Production process according to one of Claims 9 or 10, characterised in that (a) the solution is prepared by mixing in aqueous medium oxalic acid or a salt of oxalic acid, an aluminium salt and at least one salt of a transition metal in order to produce the mixed carboxylic salt by a complexing reaction between the oxalic radicals, the metallic aluminium ions and the ions of the transition metal or metals.

12. Production process according to Claim 11, characterised in that (a) use is made of ammonium oxalate, aluminium chloride or nitrate and chloride or nitrate of the transition metal or metals in order to prepare the mixed carboxylic salt having the formula:

$$Al_{(1-x)} M_x (C_2O_4)_3 (NH_4)_3$$

13. Production process according to one of Claims 9, 10, 11 or 12, characterised in that (a) an aqueous solution of mixed carboxylic salt is prepared having a concentration between 0.1 and 3 mols/litre.

14. Production process according to one of Claims 9 to 13, characterised in that (b) the mixed carboxylic salt is precipitated by adding the aqueous solution to an alcoholic solvent or a mixture of an alcoholic solvent and another organic solvent or a mixture of alcoholic solvents, in particular a mixture of ethanol and ethylene glycol or methanol and ethylene glycol.

13

EP 0 491 939 B1

**15.** Process according to Claim 14 for the production of a composite alumina/iron powder, characterised in that (b) use is made by way of solvent of ethanol to which a smaller amount of a base has been added.

**16.** Production process according to Claim 13, characterised in that (b) the aqueous solution of mixed carboxylic salt is poured into the solvent so as to ensure that the volumetric ratio of said aqueous solution to said solvent amounts to between 5 and 20, the medium being stirred for a period of at least 30 minutes and at a temperature amounting to not more than 30°C.

**17.** Production process according to one of Claims 9 to 16, characterised in that (c) the precipitate is separated by filtration or centrifuging, washed with acetone or ethanol and dried at a temperature of less than 80°C.

**18.** Production process according to one of Claims 9 to 17, characterised in that (d) the decomposition treatment consists in slowly heating the powder under an air stream at a rate of temperature increase amounting to not more than 2°C per minute until a platform temperature preferably between 370° and 450°C has been reached, whereupon the powder is maintained at said platform temperature for at least 1 hour.

**19.** Process according to one of Claims 9 to 18 for the production of a composite powder containing a transition metal with a low melting-point, i.e. iron, cobalt or nickel, or an alloy with a low melting-point, i.e. iron/chromium, cobalt/nickel or nickel/chromium, characterised in that (e) the mixed oxide obtained at the end of operation (d) is subjected to an annealing treatment in air for at least 30 minutes.

**20.** Production process according to Claim 19, characterised in that (f) the reduction of the crystallised solid solution is brought about in an atmosphere of dry hydrogen during a period of between 2 and 20 hours.

**21.** Process according to one of Claims 9 to 18 for the production of a composite powder containing a transition metal with a high melting-point i.e. chromium or niobium, characterised in that (f) the reduction of the mixed amorphous oxide resulting from operation (d) is brought about directly in an atmosphere of dry hydrogen during a period of between 10 and 20 hours.

**22.** Process according to one of Claims 9 to 18 for the production of a composite alumina/molybdenum powder, characterised in that (f) the reduction of the mixed amorphous oxide resulting from operation (d) is brought about directly in an atmosphere of dry hydrogen by first heating the oxide to a platform temperature between 400 and 500°C during a period of between 1 and 5 hours, and then to a final platform temperature between 1000° and 1200°C during a period of between 5 and 20 hours.

**23.** Process for the production of a cermet according to one of Claims 7 or 8, characterised in that it consists in preparing a composite ceramic/metal powder by implementing the process according to one of Claims 9 to 22 and in causing said powder to be sintered under the following conditions:
- addition of a smaller amount of an organic binding agent having a decomposition temperature between 150°C and 300°C, whereby said decomposition is accompanied by a release of CO,
- compacting of the powder/binding-agent mixture,
- heating of the compacted mixture in a neutral atmosphere or subject to reduced pressure at a temperature between 1350°C and 1550°C.

**Patentansprüche**

**1.** Keramik/Metall-Mehrstoffpulver aus Körnern in Mikrongröße, umfassend Aluminiumoxid und mindestens ein Übergangsmetall, dadurch gekennzeichnet, daß
- jedes Korn eine kompakte Matrix umfaßt, wobei die spezifische Oberfläche des Pulvers weniger als 5 m²/g beträgt,
- die besagte Matrix aus Aluminiumoxid (Korund) hexagonaler Struktur besteht,
- das Übergansmetall bzw. die Übergangsmetalle in jedem Kern im Innern der Matrix aus Aluminiumoxid dispergiert sind, und zwar in der Form von Kristalliten von geringerer Größe als 50 Nanometern,
- das Gewichtsverhältnis Metall/Aluminiumoxid geringer ist als 30 %.

14

2. Mehrstoffpulver nach Anspruch 1, dadurch gekennzeichnet, daß das Übergangsmetall bzw. die Übergangsmetalle in der Aluminiumoxid-Matrix jedes Korns dispergiert sind, wobei die Größenverteilung so beschaffen ist, daß anzahlmäßig 90 % der Metallteilchen innerhalb einer Spanne von weniger als 8 Nanometern verteilte Größen aufweisen.

3. Mehrstoffpulver nach Anspruch 2, dadurch gekennzeichnet, daß das Übergangsmetall bzw. die Übergangsmetalle in der Aluminiumoxid-Matrix jedes Korns dispergiert sind, wobei die Größenverteilung so beschaffen ist, daß anzahlmäßig 90 % der Metallteilchen Größen zwischen 1 und 7 Nanometern aufweisen.

4. Mehrstoffpulver nach einem der Ansprüche 1, 2 oder 3, bestehend aus Körnern, die eine Aluminiumoxid-Matrix und mindestens ein Metall der folgenden Gruppe umfassen: Eisen, Chrom, Molybdän, Kobalt, Nickel, Niobium oder eine Legierung dieser Metalle.

5. Mehrstoffpulver nach einem der Ansprüche 1, 2, 3 oder 4, dadurch gekennzeichnet, daß es aus Körnern besteht, die eine Aluminiumoxid-Matrix und mindestens zwei Übergangsmetalle umfassen, wobei diese in der Form einer Metallegierung in der Matrix dispergiert sind.

6. Mehrstoffpulver nach Anspruch 5, dadurch gekennzeichnet, daß die Körner Kristallite einer der folgenden Legierungen umfassen: Eisen/Chrom, Nickel/Kobalt bzw. Nickel/Chrom.

7. Durch Sintern eines Mehrstoffpulvers aus Keramik/Metall nach einem der Ansprüche 1 bis 6 gewonnenes Cermet, umfassend eine keramische Matrix aus $\alpha$-Aluminiumoxid, in der auf intragranuläre Weise Metallteilchen mit Größen von weniger als 100 Nanometern dispergiert sind.

8. Cermet nach Anspruch 7, gekennzeichnet durch die folgenden Eigenschaften:
   . Biegefestigkeit zwischen 500 und 1 000 Megapascal,
   . Elastizität zwischen 5 und 10 Megapascal je $\sqrt{m}$.

9. Verfahren zur Herstellung eines Mehrstoffpulvers aus Keramik/Metall nach einem der Ansprüche 1 bis 6, dadurch gekennzeichnet, daß es darin besteht:
   (a) eine wässerige Lösung eines gemischten Carboxylsalzes aus Aluminium und einem oder mehreren Übergangsmetallen der Formel $Al_{1-x} M_x (R)_n$ zuzubereiten, wobei M das Übergangsmetall bzw. die Übergangsmetalle bezeichnet, R ein Carboxylradikal ist, x geringer ist als 0,3 und n eine ganze Zahl ist,
   (b) dieses gemischte Salz mit Hilfe eines mit Wasser mischbaren organischen Lösungmittels, in dem das besagte Salz stabil und unlöslich ist, zu fällen,
   (c) das gewonnene Präzipitat von der flüssigen Phase abzuscheiden und das Präzipitat in der Form eines Pulvers in Mikrongröße des gemischten Salzes, des sogenannten Vorprodukts, zu erfassen,
   (d) das besagte Vorprodukt einer thermischen Abbaubehandlung in Gegenwart von Sauerstoff und bei einer Temperatur zwischen 300°C und 500°C zu unterziehen, und zwar unter Bedingungen, die geeignet sind, dessen Anbau und die Erzeugung eines gemischten amorphen Oxids von Aluminium und einem oder mehreren Übergangsmetallen der Formel $[Al_2 O_3]_{(1-x)} M_{2x} O_y$ zu bewirken, wobei y eine ganze Zahl ist, die von der Wertigkeit des Übergangsmetalls bzw. der Übergangsmetalle abhängt,
   (e) wenn es sich um Metalle oder eine Legierung mit niedrigerem Schmelzpunkt als 1 600°C handelt, das gemischte Oxid in Gegenwart von Sauerstoff und bei einer Temperatur zwischen 1 000°C und 1 300°C einer thermischen Glühbehandlung zu unterziehen, um eine feste kristallisierte Lösung von Aluminiumoxid und Oxid des Übergangsmetalls bzw. der Übergangsmetalle zu erhalten,
   (f) entweder das in der Operation (d) gewonnene amorphe gemischte Oxid oder, wenn es sich um Metalle oder eine Legierung mit niedrigem Schmelzpunkt handelt, die in der Operation (e) gewonnene feste kristallisierte Lösung durch eine thermische Behandlung in einer reduzierenden, wasserdampffreien Atmosphäre und bei einer Temperatur zwischen 1 000°C und 1 300°C während einer Zeitspanne von mehr als 2 Stunden zu reduzieren.

10. Herstellungsverfahren nach Anspruch 9, dadurch gekennzeichnet, daß (a) die wässerige Lösung des gemischten Carboxylsalzes aus mindestens einem Salz eines Metalls der folgenden Gruppe - Eisen, Chrom, Molybdän, Kobalt, Nickel, Niobium - oder mit mindestens zwei zum Bilden einer Legierung

EP 0 491 939 B1

geeigneten Salzen dieser Metalle zubereitet wird.

11. Herstellungsverfahren nach einem der Ansprüche 9 oder 10, dadurch gekennzeichnet, daß (a) die Lösung dadurch zubereitet wird, daß man Oxalsäure bzw. ein Oxalsäuresalz, ein Aluminiumsalz und mindestens ein Salz eines Übergangsmetalls in wässerigem Medium mischt, um das gemischte Carboxylsalz durch eine komplexbildende Reaktion zwischen den Oxalradikalen, den metallischen Aluminiumionen und den Ionen des Übergangsmetalls bzw. der Übergangsmetalle zu bewirken.

12. Herstellungsverfahren nach Anspruch 11, dadurch gekennzeichnet, daß (a) Ammoniumoxalat, Aluminiumchlorid bzw. -nitrat und Chlorid bzw. Nitrat des Übergangsmetalls bzw. der Übergangsmetalle gewählt wird, um das gemischte Carboxylsalz der folgenden Formel:

$$Al_{(1-x)} M_x (C_2O_4)_3 (NH_4)_3$$

zu bilden.

13. Herstellungsverfahren nach einem der Ansprüche 9, 10, 11 oder 12, dadurch gekennzeichnet, daß (a) eine wässerige Lösung von gemischtem Carboxylsalz zubereitet wird, deren Konzentration zwischen 0,1 und 3 Mol/l beträgt.

14. Herstellungsverfahren nach einem der Ansprüche 9 bis 13, dadurch gekennzeichnet, daß (b) Fällung des gemischten Carboxylsalzes bewirkt wird, indem man die wässerige Lösung in ein alkoholisches Lösungsmittel oder ein Gemisch eines alkoholischen Lösungsmittels mit einem anderen organischen Lösungsmittel oder ein Gemisch alkoholischer Lösungsmittel, insbesondere ein Gemisch von Äthanol und Äthylenglykol oder Methanol und Äthylenglykol, einführt.

15. Verfahren nach Anspruch 14 zur Herstellung eines Mehrstoffpulvers aus Aluminiumoxid/Eisen, dadurch gekennzeichnet, daß (b) als Lösungsmittel Äthanol unter Zusatz einer geringeren Menge einer Base gewählt wird.

16. Herstellungsverfahren nach Anspruch 13, dadurch gekennzeichnet, daß (b) die wässerige Lösung von gemischtem Carboxylsalz so in das Lösungsmittel gegossen wird, daß das volumetrische Verhältnis der besagten wässerigen Lösung zu dem besagten Lösungsmittel zwischen 5 und 20 beträgt, wobei das Medium während einer Zeitspanne von mindestens 30 Minuten bei einer Temperatur von nicht mehr als 30°C gerührt wird.

17. Herstellungsverfahren nach einem der Ansprüche 9 bis 16, dadurch gekennzeichnet, daß (c) das gefällte Produkt durch Filtrieren oder Zentrifugieren abgeschieden, mit Aceton oder Äthanol gewaschen und bei einer Temperatur von weniger als 80°C getrocknet wird.

18. Herstellungsverfahren nach einem der Ansprüche 9 bis 17, dadurch gekennzeichnet, daß (d) die Abbaubehandlung darin besteht, daß das Pulver unter einem Luftstrom langsam erhitzt wird, wobei die Temperaturanstiegsgeschwindigkeit 2°C pro Minute nicht übersteigt, bis eine Niveautemperatur zwischen vorzugsweise 370° und 450°C erreicht ist, worauf das Pulver mindestens eine Stunde lang bei dieser Niveautemperatur erhalten wird.

19. Verfahren nach einem der Ansprüche 9 bis 18 zur Herstellung eines Mehrstoffpulvers, das ein Übergangsmetall mit niedrigem Schmelzpunkt, und zwar Eisen, Kobalt oder Nickel, oder eine Legierung mit niedrigem Schmelzpunkt, und zwar Eisen/Chrom, Kobalt/Nickel oder Nickel/Chrom, enthält, dadurch gekennzeichnet, daß (e) das bei Abschluß der Operation (d) erhaltene gemischte Oxid wenigstens 30 Minuten lang einer Glühbehandlung in Gegenwart von Luft unterzogen wird.

20. Herstellungsverfahren nach Anspruch 19, dadurch gekennzeichnet, daß (f) die Reduktion der kristallisierten festen Lösung während einer Dauer von 2 bis 20 Stunden in einer Atmosphäre aus trockenem Wasserstoff durchgeführt wird.

21. Verfahren nach einem der Ansprüche 9 bis 18 zur Herstellung eines Mehrstoffpulvers, das ein Übergangsmetall mit hohem Schmelzpunkt, und zwar Chrom oder Niobium, enthält, dadurch gekenn-

16

zeichnet, daß (f) die Reduktion des in der Operation (d) gewonnenen amorphen gemischten Oxids unmittelbar während einer Zeitspanne von 10 bis 20 Stunden in einer Atmosphäre von trockenem Wasserstoff durchgeführt wird.

22. Verfahren nach einem der Ansprüche 9 bis 18 zur Herstellung eines Mehrstoffpulvers aus Aluminiumoxid/Molybdän, dadurch gekennzeichnet, daß (f) die Reduktion des in der Operation (d) gewonnenen amorphen gemischten Oxids unmittelbar in einer Atmosphäre von trockenem Wasserstoff durchgeführt wird, wobei das Oxid zuerst während einer Zeitspanne von 1 bis 5 Stunden auf eine Niveautemperatur zwischen 400 und 500°C und danach während einer Zeitspanne von 5 bis 20 Stunden auf eine endgültige Niveautemperatur zwischen 1 000° und 1 200°C erhitzt wird.

23. Verfahren zur Herstellung eines Cermets nach einem der Ansprüche 7 oder 8, dadurch gekennzeichnet, daß es darin besteht, durch Durchführung des Verfahrens nach einem der Ansprüche 9 bis 22 ein Mehrstoffpulver aus Keramik/Metall zuzubereiten und Sinterung dieses Pulvers unter den folgenden Bedingungen zu bewirken:
   - Zusatz eines kleineren Anteils eines organischen Bindemittels mit einer Abbautemperatur zwischen 150°C und 300°C, wobei der besagte Anbau gleichzeitig mit der Abgabe von CO erfolgt,
   - Verdichtung des Gemisches aus Pulver und Bindemittel,
   - Erhitzung des verdichteten Gemisches in einer neutralen Atmosphäre oder unter verringertem Druck und bei einer Temperatur zwischen 1 350°C und 1 550°C.

## Fig 1

## Fig 2

18

## Fig 3

## Fig 4

## Fig 5

## Fig 6

Fig 7

## Fig 8

## Fig 9

Fig 10

75 nm

$_\alpha$Fe

Fig 11

$_\alpha$Fe

$_\alpha Al_2O_3$

75 nm

Fig 12

αFe

75 nm

Fig 13

αFe

75 nm

24

Fig 14

Fe$_{0.8}$Cr$_{0.2}$

75 nm

Fig 15

Fe$_{0.8}$Cr$_{0.2}$

75 nm

EP 0 491 939 B1

Fig 16

Mo

75 nm

26

Fig 17

Cr

75 nm

Fig 18

Cr

75 nm